Europäisches Patentamt

European Patent Office

Office européen des brevets

(11) Veröffentlichungsnummer: **0 001 390**
**B1**

(12) **EUROPÄISCHE PATENTSCHRIFT**

(45) Veröffentlichungstag der Patentschrift:
14.01.81

(21) Anmeldenummer: **78100718.2**

(22) Anmeldetag: **22.08.78**

(51) Int. Cl.³: **B 23 K 9/06**

(54) Schweissstromquelle zum Lichtbogenschweissen, die eine Gleichspannung zum Zünden und eine Wechselspannung zum Schweissen liefert.

(30) Priorität: **08.09.77 DE 2740452**

(43) Veröffentlichungstag der Anmeldung:
**18.04.79 Patentblatt 79/8**

(45) Bekanntmachung des Hinweises auf die Patenterteilung:
**14.01.81 Patentblatt 81/2**

(84) Benannte Vertragsstaaten:
**BE FR SE**

(56) Entgegenhaltungen:
**BE-A-495 438**
**DE-A-2 621 968**
**FR-A-1 474 633**
**FR-A-2 133 609**
**GB-A-1 003 250**
**US-A-3 571 558**

(73) Patentinhaber: **MESSER GRIESHEIM GMBH,**
**Patentabteilung Hanauer Landstrasse 330,**
**D-6000 Frankfurt/Main (DE)**

(72) Erfinder: **Röhm, Ernst, C.v. Hofackerstrasse 10,**
**D-8132 Tutzing (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

## Schweißstromquelle zum Lichtbogenschweißen, die eine Gleichspannung zum Zünden und eine Wechselspannung zum Schweißen liefert

Die vorliegende Erfindung betrifft eine Schweißstromquelle zum Lichtbogenschweißen mit Wechselstrom, insbesondere zum Schweißen unter erhöhter elektrischer Gefährdung, z. B. in engen Räumen, mit einem Schweißtransformator und einem an dessen Sekundärkreis angeschlossenen Schweißstromkreis.

Beim Wechselstromschweißen unter erhöhter elektrischer Gefährdung, beispielsweise in Kesseln, darf bei nichtbrennendem Lichtbogen eine Effektivspannung von 42 Volt nicht überschritten werden. Eine eventuell auftretende höhere Spannung muß in einem Zeitraum von 0,2 sec. auf eine effektive Wechselspannung von 42 Volt herabgesetzt werden. Die Einhaltung der Sicherheitsvorschriften ist einerseits zum Schutz des Schweißers unbedingt erforderlich, hat aber andererseits den Nachteil, daß ein einfaches und sicheres Zünden des Lichtbogens nur schwer möglich ist. In besonders hohem Maße tritt dieser Nachteil beim WIG-Schweißen mit niedrigen Schweißströmen sowie bei Verwendung von Filterkondensatoren im Schweißstromkreis auf.

Es sind schon zur Vermeidung dieser Nachteile verschiedenartige Stromquellen entwickelt worden. Beispielsweise ist aus der DE-C-2 119 135 eine Stromquelle der eingangs genannten Art bekannt geworden, bei welcher im Schweißstromkreis zwei antiparallel geschaltete Gleichrichter angeordnet sind und wobei bei Leerlauf des Schweißstromkreises einer der beiden Gleichrichter abschaltbar ist. Damit wird eine Schweißstromquelle geschaffen, die eine Gleichspannung zum Zünden und eine Wechselspannung zum Schweißen liefert. Bei dieser bekannten Einrichtung muß der Transformator derart dimensioniert sein, daß im Leerlauf ein möglichst hoher Gleichspannungsspitzenwert — bis zu 100 Volt — erreicht wird. Andererseits ist es für das Schweißen oft ausreichend, einen Transformator einzusetzen, der für die genannte Leerlaufspannung von 42 Volt dimensioniert ist. Außerdem sind bei der Schaltung nach der DE-C-2 119 135 die beiden antiparallel geschalteten Gleichrichter für den vollen Schweißstrom auszulegen.

Aufgabe der vorliegenden Erfindung ist es, eine Schweißstromquelle der eingangs genannten Art zu schaffen, die eine Gleichspannung zum Zünden und eine Wechselspannung zum Schweißen liefert und bei der eine aufwandsparende und kostengünstige Dimensionierung des Schweißtransformators und der gleichstromerzeugenden Bauteile erreicht wird.

Zur Lösung dieser Aufgabe wird gemäß der vorliegenden Erfindung bei einer Stromquelle, bei der bei Leerlauf des Schweißstromkreises eine Gleichstromquelle in den Schweißstromkreis einschaltbar und bei Schweißbeginn diese Gleichstromquelle ohne Schweißstromunterbrechung aus dem Schweißstromkreis wegschaltbar ist, vorgeschlagen, daß die Gleichstromquelle einen Transformator aufweist, dessen Leerlaufspannung verschieden von der des Schweißtransformators ist.

Durch die Erfindung wird es möglich, den Schweißtransformator ausschließlich für die zum Schweißen erforderlichen Parameter auszulegen. Die erforderliche Zusatzenergie zum Zünden wird bevorzugt über die separate Gleichstromquelle zugeführt, und zwar nur in der am Anfang zum Zünden erforderlichen Stromstärke, die im allgemeinen erheblich unter der üblichen Schweißstromstärke liegt. Dabei wird in der Regel die Leerlaufspannung des Schweißtransformators kleiner sein als die des Transformators der Gleichstromquelle zum Zünden. Die am meisten zur Anwendung kommenden Werte dürften für den Schweißtransformator in der Größenordnung von 40 – 60 Volt und für den Transformator der Gleichstromquelle in der Größenordnung von 100 Volt Spitzenwert liegen. Somit erfolgt eine Anpassung der Leerlaufgleichspannung bzw. ihres Spitzenwertes an den aus Sicherheitsgründen zulässigen Höchstwert, der im allgemeinen von der Spannung des Hauptschweißtransformators nicht erreicht wird, in Sonderfällen (Plasma) aber auch überschritten werden kann.

Bevorzugt ist der Sekundärseite des Transformators der Gleichstromquelle in Reihenschaltung ein Gleichrichter und ein Widerstand zugeordnet. Dieser Widerstand ist bevorzugt als Strombegrenzungswiderstand ausgebildet und für einen Zündstrom im Bereich von 3 – 20 A, vorzugsweise 5 – 7 A, ausgelegt. In Verbindung mit dem entsprechend auf diese Verhältnisse ausgelegten Gleichrichter (Diode) wird eine besonders einfache und kostengünstige Gleichstromquelle erhalten, mit dem Vorteil einer optimalen und störungsfreien Gleichstromzündung beim Wechselstromschweißen.

Die Erfindung wird unter Bezugnahme auf die in den Zeichnungen dargestellten Ausführungsbeispiele sowie unter Hinweis auf weitere vorteilhafte Merkmale nachstehend näher erläutert.

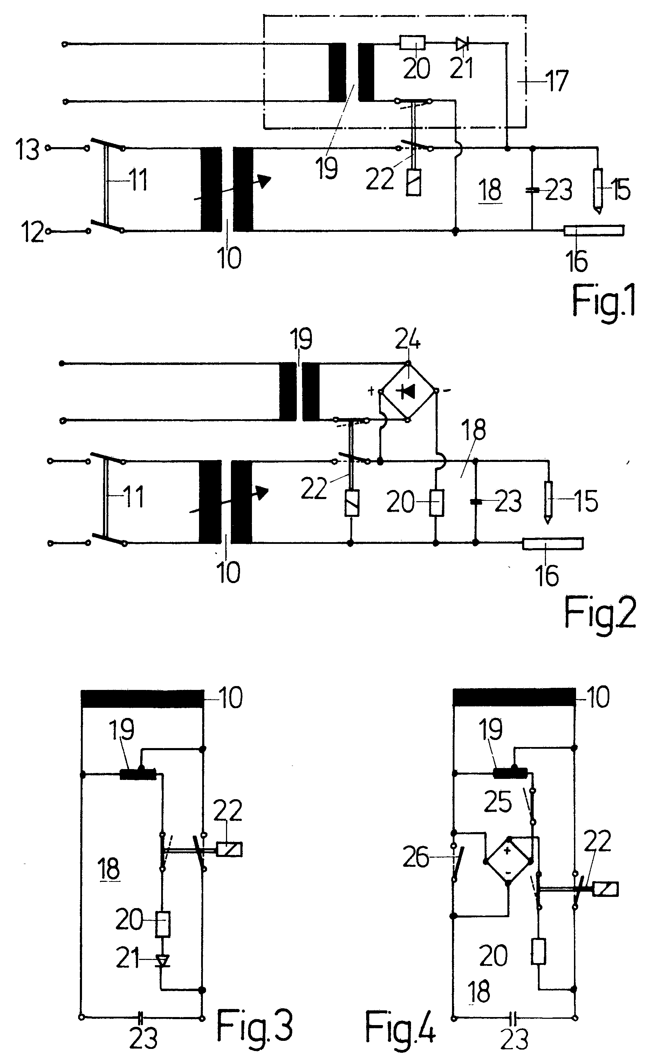

Die in Fig. 1 dargestellte Schaltungsanordnung besteht aus einem Schweißtransformator 10, dessen Primärwicklung beispielsweise über einen zweipoligen, vorteilhaft als Schütz ausgebildeten Netzschalter 11 mit den Polklemmen 12 und 13 eines Wechselstromnetzes verbunden ist. Der Transformator ist beispielsweise als verstellbarer Streu-Kern-Transformator zur Einstellung der gewünschten Schweißstromstärke ausgebildet. Es sind selbstverständlich auch andere Einstellungen für den Schweißstrom, beispielsweise Phasenanschnittsteuerungen im Primäroder Sekundärkreis des Transformators oder dergleichen möglich.

Das eine Ende der Sekundärwicklung des Transformators 10 ist mit einer Schweißelektrode 15 des Elektrodenhalters oder eines Schweiß- oder Schneidbrenners verbunden. Das andere Ende der Sekundärwicklung des Transformators 10 ist mit dem Werkstück 16 verbunden. Die Gleichstromquelle zum Zünden des Wechselstromschweißlichtbogens ist in ihrer Gesamtheit mit 17 bezeichnet und parallel zum Transformator 10 in den Schweißstromkreis 18 geschaltet. Die Gleichstromquelle 17 weist einen Transformator 19 auf, dessen Leerlaufspannung von der des Transformators 10 verschieden ist. Der Sekundärseite des Transformators 19 ist in Reihenschaltung ein Widerstand 20 sowie ein Gleichrichter 21 zugeordnet, wobei bevorzugt der Widerstand als Strombegrenzungswiderstand ausgebildet ist und den kurzzeitig wirkenden Zündgleichstrom auf einen Wert im Bereich von 3 – 20 A, vorzugsweise 5 – 7 A, begrenzt. Ferner ist der Sekundärseite des Transformators 19 sowie der Sekundärseite des Transformators 10 ein mit 22 bezeichneter Umschalter zur Umschaltung der Gleichstromquelle 17 und des Schweißtransformators 10 zugeordnet. Der Transformator 19 ist selbstverständlich ebenfalls an ein Wechselstromnetz angeschlossen. Ein ausgangsseitig im Schweißstromkreis parallel zur Lichtbogenstrecke vorgesehener Kondensator ist mit 23 bezeichnet.

Zum Zündbeginn weist der Umschalter 22 die in der Fig. 1 veranschaulichte Schalterstellung auf, d. h. über die Gleichstromquelle 17 wird ein Zündgleichstrom der Elektrode 15 und dem Werkstück 16 zugeführt. Diese Zündgleichspannung liegt in der Größenordnung bis zu 100 Volt Spitzenwert. Nach Zünd··ng des Lichtbogens fließt im Zündstromkreis ein Schweißgleichstrom und der Umschalter 22 wird mittels eines Umschaltimpulses in die in Fig. 1 gestrichelt dargestellte Position gebracht, wodurch der Schweißtransformator 10, bei dem selbstverständlich vorher der Netzschalter 11 geschlossen worden ist, mit der Elektrode 15 und dem Werkstück 16 verbunden wird. Der Umschaltimpuls kann durch Verwendung der am Widerstand 20 abfallenden Spannung erzeugt werden. Es sind selbstverständlich auch andere Umschaltimpulserzeugungsarten möglich, beispielsweise die Verwendung eines Relais im Schweißstromkreis, die auf die bei Leerlauf, Zünden und Last unterschiedlich sich einstellenden Strom- und Spannungsbedingungen ansprechen und entsprechende Impulse abgeben.

Bei Verwendung einer Phasenanschnittsteuerung zur Einstellung des Schweißstromes kann diese anstelle des Umschalters 22 dazu benutzt werden, den Hauptstromkreis, ausgehend vom Transformator 10, im Leerlauf abzuschalten.

Beim Ausführungsbeispiel gemäß Fig. 1 ist der Gleichrichter als Einwegdiode 21 ausgebildet. Es ist selbstverständlich auch möglich, eine Vollwellengleichrichtung vorzusehen. Diese ist in Fig. 2 dargestellt, wobei der Brückengleichrichter mit 24 bezeichnet ist. Der übrige Aufbau entspricht dem der Fig. 1, so daß hierauf nicht näher eingegangen wird. Es wird damit eine bessere Wirkung des Zündgleichstromes erreicht als mit der Schaltung nach Fig. 1, da im Zusammenwirken mit dem Kondensator 23 stromlose oder stromschwache Pausen nicht auftreten können.

Statt des Widerstandes sind auch andere strombegrenzende Mittel vorteilhaft möglich, und zwar beispielsweise eine Drossel im Primärkreis von Trafo 19, die Ausbildung des Trafos 19 als Streutrafo, sowie eine Phasenanschnittsteuerung, z. B. mit den Gleichrichtern 21 bzw. 24.

Die Ausführungsbeispiele gemäß Fig. 3 und gemäß Fig. 4 unterscheiden sich von denen nach Fig. 1 und 2 dadurch, daß der Transformator 19 in Sparschaltung ausgebildet ist, auch die Kontakte 25 und 26 durch den Umschalter 22 betätigt werden. Die veranschaulichte Kontaktstellung ist beim Zünden und die gestrichelte Kontaktstellung beim Schweißen vorhanden. Der Spartrafo ist im Hinblick auf die Herstellkosten besonders vorteilhaft.

## Patentansprüche

1. Schweißstromquelle zum Lichtbogenschweißen mit Wechselstrom, insbesondere zum Schweißen unter erhöhter elektrischer Gefährdung, z. B. in engen Räumen, mit einem Schweißtransformator (10) und einem an dessen Sekundärkreis angeschlossenen Schweißstromkreis (18), wobei bei Leerlauf des Schweißstromkreises (18) eine Gleichstromquelle (17) in den Schweißstromkreis (18) einschaltbar und bei Schweißbeginn diese Gleichstromquelle (17) ohne Schweißstromunterbrechung aus dem Schweißstromkreis (18) wegschaltbar ist, dadurch gekennzeichnet, daß die Gleichstromquelle (17) einen Transformator (19) aufweist, dessen Leerlaufspannung verschieden von der des Schweißtransformators (10) ist.

2. Schweißstromquelle nach Anspruch 1, dadurch gekennzeichnet, daß der Sekundärseite des Transformators (19) in Reihenschaltung ein Gleichrichter (21) und ein Widerstand (20) zugeordnet ist und daß ferner ein Umschalter (22) zur Umschaltung der Gleichstromquelle (17) und des Schweißtransformators (10) vorgesehen ist.

3. Schweißstromquelle nach Anspruch 2, dadurch gekennzeichnet, daß der Transformator (19) der Gleichstromquelle (17) als von der Sekundärseite des Schweißtransformators gespeister Spartrafo ausgebildet ist.

## Claims

1. A welding power source for arc welding with AC especially for welding under increased electrical risks, for example in constricted rooms, with a welding transformer (10) and a welding circuit (18) connected to the secondary circuit of that transformer where in the no-load phase of the welding circuit (18) a DC power source (17) can be introduced into the welding circuit (18) and where this DC power source (17) can be put out of the welding circuit (18) without breaking the welding current when the welding duty is started, being characterized by the DC power source (17) having a transformer (19) the no-load voltage of which is different from that of the welding transformer (10).

2. The welding power source of claim 1, being characterized by a rectifier (21) and a resistor (20) being assigned in series connection to the secondary side of the transformer (19) and by a change-over switch (22) being provided in addition for converting the DC power source (17) and the welding transformer (10).

3. The welding power source of claim 2, being characterized by the transformer (19) of the DC power source (17) being designed to be an economy transformer which is fed from the secondary side of the welding transformer.

**Revendications**

1. Source de courant de soudage pour le soudage à l'arc avec un courant alternatif, notamment pour soudage dans des conditions de risque électrique élevé, par exemple dans des enceintes étroites, à l'aide d'un transformateur de soudage (10) et d'un circuit de courant de soudage (18) branché sur le secondaire du transformateur, une source de courant continu (17) pouvant être branchée sur le circuit du courant de soudage (18) lorsque celui-ci est en marche à vide, et au début du soudage cette source de courant continu (17) est coupée du circuit de soudage sans interruption du courant de soudage, source de courant caractérisée en ce que la source de courant continu (17) comporte un transformateur (19) dont la tension de marche à vide est différente de celle du transformateur de soudage (10).

2. Source de courant de soudage selon la revendication 1, caractérisée en ce que le secondaire du transformateur (19) comporte en série un redresseur (21) et une résistance (20), et un inverseur (22) est prévu pour inverser la source de courant continu (17) et le transformateur de soudage (10).

3. Source de courant de soudage selon la revendication 2, caractérisée en ce que le transformateur (19) de la source de courant continu (17) est réalisé sous forme de transformateur économique alimenté par le secondaire du transformateur de soudage.

Fig.1

Fig.2

Fig.3

Fig.4